# DEMANDE DE BREVET EUROPEEN

(11) **EP 3 589 078 A1**
(43) Date de publication de la demande: **01.01.2020**
(21) Numéro de dépôt: 19181757.6
(22) Date de dépôt: 21.06.2019
(51) Int. Cl.: H05B 33/08

(54) **DISPOSITIF DE PILOTAGE DE L`ALIMENTATION ELECTRIQUE DE SOURCES LUMINEUSES D'UN VEHICULE AUTOMOBILE EN FONCTION DES VARIATIONS DE LEURS TEMPERATURES**

(30) Priorité: 22.06.2018 FR 1855614
(71) Demandeur: Valeo Vision Belgique, 7822 Meslin l'Evêque (BE)
(72) Inventeur: DELGRANGE, Frédérick, 7822 Meslin l'Evêque (BE); DUBOIS, Yves, 7822 Meslin l'Evêque (BE); DURAND, Nicolas, 7822 Meslin l'Evêque (BE)
(74) Mandataire: Valeo Vision

(57) **Abrégé**

L'invention propose un dispositif de pilotage de l'alimentation électrique d'au moins une source lumineuse d'un véhicule automobile, comprenant une unité d'alimentation agencée pour fournir un courant électrique à ladite source lumineuse, l'intensité du courant électrique étant dépendante d'une tension électrique de référence. Le dispositif est remarquable en ce qu'une unité de commande est agencée pour fournir, à partir d'une tension d'entrée, différents niveaux de tension électrique de référence à ladite unité d'alimentation, en fonction de la situation d'une indication de la température de ladite source lumineuse par rapport à au moins une première valeur seuil et une deuxième valeur seuil supérieure à la première valeur seuil, dans le but de respecter la réglementation optique.

## Description

L'invention a trait au domaine l'alimentation électrique de sources lumineuses pour véhicules automobile. Plus particulièrement, l'invention a trait à l'alimentation électrique de sources lumineuses du type diode électroluminescente, LED.

Une diode électroluminescente, LED, est un composant électronique capable d'émettre de la lumière lorsqu'il est parcouru par un courant électrique. Dans le domaine automobile, on a de plus en plus recours à la technologie LED pour diverses solutions de signalisation lumineuse. Les LEDs sont utilisées afin d'assurer des fonctions lumineuses telles que les feux diurnes, les feux de signalisation etc... L'intensité lumineuse émise par une LED est en général dépendante de l'intensité du courant électrique qui la traverse. Entre autres, une LED est caractérisée par une valeur seuil d'intensité de courant électrique. Ce courant direct (« forward current ») maximal est en général décroissant à température croissante. Afin de protéger la LED de détériorations, il est connue de réduire l'intensité du courant électrique qui traverse la LED lorsque la température de jonction se rapproche du maximum autorisé. Comme la température de fonctionnement varie au cours de l'utilisation d'une source LED, par exemple au sein d'un feu de signalisation d'un véhicule automobile, à courant électrique constant, l'intensité lumineuse émise par la LED n'est pas constante. De plus, pour une diode électroluminescente utilisant des semi-conducteurs AlInGaP, à courant électrique constant, des chutes d'intensité lumineuse du flux lumineux émis allant jusqu'à 70% sont observées sur une plage de température allant de -40°C à 100°C. Pour d'autres types de diodes électroluminescentes, par exemple de type InGaN, le même phénomène se présente, bien qu'à moindre envergure.

La réglementation actuellement en vigueur requiert qu'à température ambiante de 25°C, l'intensité du flux lumineux émis par un feu de véhicule automobile, par exemple un feu brouillard arrière, se situe toujours entre une valeur minimale et une valeur maximale. Cependant, la température de jonction d'une source lumineuse, et donc son intensité lumineuse émise à courant électrique constant, varie de manière substantielle entre le moment ou la source est allumée et par exemple un moment suivant son fonctionnement continu sur trente minutes. Si le courant électrique qui alimente la source lumineuse a une intensité telle que l'intensité du flux lumineux émis soit conforme à la réglementation à trente minutes de fonctionnement, la valeur maximale permise est généralement surpassée avec la même intensité de courant électrique à froid. Pour remédier à ce problème, il a été proposé d'utiliser des éléments de dissipation de chaleur. Cependant cette solution est encombrante et onéreuse dans l'espace déjà très restreint disponible pour le développement d'un feu de véhicule automobile.

Il est connu dans l'art d'utiliser un circuit de pilotage pour piloter l'alimentation électrique d'un ensemble ou groupe de LEDs. Le circuit définit le courant électrique appliqué à une branche montée en charge et comprenant le groupe de LEDs branchées en série, ou sous forme matricielle. Afin de fournir une alimentation constante, des circuits de pilotage connus utilisent différents types de convertisseurs, DC/DC, linéaire, résistif, etc.... pour convertir le courant électrique continu fourni par exemple par une batterie de voiture en un courant continu de charge, apte à alimenter les LEDs en question. Ces circuits connus ne prennent pas en compte la température des sources lumineuses, et il est donc difficile de garantir un flux lumineux respectant des contraintes d'intensités prédéterminées par la réglementation si la température des sources lumineuses varie.

L'invention a pour objectif de pallier à au moins un des problèmes posés par l'art antérieur. Plus précisément, l'invention a pour objectif de proposer un dispositif de pilotage de l'alimentation électrique de sources lumineuses qui tient compte des variations de l'intensité du flux lumineux émis par les sources, en fonction des variations de leur température.

Selon un premier aspect de l'invention, un dispositif de pilotage de l'alimentation électrique d'au moins une source lumineuse d'un véhicule automobile est proposé. Le dispositif comprend une unité d'alimentation agencée pour fournir un courant électrique à ladite source lumineuse. L'intensité du courant électrique est dépendante d'une tension électrique de référence. Le dispositif est remarquable en ce qu'il comprend une unité de commande agencée pour fournir, à partir d'une tension d'entrée, différents niveaux de tension électrique de référence à ladite unité d'alimentation, en fonction de la situation d'une indication de la température de ladite source lumineuse par rapport à au moins une première valeur seuil et une deuxième valeur seuil supérieure à la première valeur seuil.

De manière préférée, l'unité de commande peut être agencée pour fournir
- un premier niveau de tension de référence, si l'indication de la température de la source lumineuse est inférieure à la première valeur seuil de température, T1.
- un deuxième niveau de tension de référence, supérieur au premier niveau de tension de référence, si l'indication de la température de la source lumineuse se situe entre la première valeur seuil de température, T1 et la deuxième valeur seuil de température, T2.
- un troisième niveau de tension de référence, si l'indication de la température de la source lumineuse est supérieure à la deuxième valeur seuil de température, T2.

L'unité de commande peut de préférence être agencée pour augmenter/diminuer le niveau de tension de référence de manière monotone entre le premier, deuxième et troisième niveau de tension de référence, en fonction de l'évolution de l'indication de la température de la source lumineuse sur une plage de valeurs sensiblement centrée autour des premières et deuxièmes valeurs seuils T1 et T2.

L'unité de commande peut de préférence comprendre un montage d'au moins deux branches dans lequel chaque branche comprend un élément interrupteur et un thermistor agencé de manière à ce que l'état d'ouverture de l'élément interrupteur soit une fonction de la température du thermistor, et dans lequel le montage est agencé à fournir ledit deuxième niveau de tension de référence , si aucun courant électrique ne traverse lesdites branches.

L'élément interrupteur de chaque branche peut de préférence comprendre un transistor bipolaire. Il peut s'agir de préférence d'un transistor bipolaire de type NPN ou de type PNP. L'élément thermistor de chaque branche peut de préférence comprendre une résistance à coefficient de température positif, PTC « positive temperature coefficient », ou à coefficient de température négatif, NTC, « negative temperature coefficient ».

De préférence, chaque branche peut comprendre au moins une résistance. Chaque branche peut de manière préférentielle comprendre un réseau de résistances.

Les caractéristiques des composants électroniques d'une branche peuvent de manière préférée définir une des valeurs seuils, ainsi qu'un biais de tension négatif par rapport au premier niveau de tension de référence.

De manière préférée, l'unité de commande peut être agencée de manière à ce que le niveau de tension de référence fourni à l'unité d'alimentation si l'indication de la température est inférieure à la première valeur seuil soit sensiblement égal au niveau de tension de référence fourni si l'indication de la température est supérieure à la deuxième valeur seuil.

L'unité d'alimentation peut de préférence comprendre un circuit convertisseur linéaire. Alternativement, elle peut comprendre un convertisseur de type DC/DC.

Selon un autre aspect de l'invention, un module lumineux pour un véhicule automobile est proposé. Le module comprend au moins une source lumineuse et un dispositif de pilotage de l'alimentation électrique de ladite source lumineuse. Le module est remarquable en ce que le dispositif de pilotage est conforme à un aspect de la présente invention.

De préférence, ladite source lumineuse peut comprendre une source à élément semi-conducteur électroluminescent. Il peut de préférence s'agir une diode électroluminescente, LED, ou d'une diode électroluminescente organique.

De manière préférée, la source lumineuse peut comprendre un élément semi-conducteur électroluminescent pixellisé. L'élément pixellisé peut de préférence comprendre un substrat commun sur lequel des éléments semi-conducteurs électroluminescents élémentaires sont disposés sous forme matricielle.

En utilisant les mesures proposées par la présente invention, il devient possible de proposer un dispositif de pilotage de l'alimentation électrique de sources lumineuses, notamment de type diode électroluminescente, LED, qui permet de fournir un courant électrique d'une intensité qui varie en fonction de la température des LEDs. Il devient donc possible de piloter les sources de manière à ce qu'elles émettent un flux lumineux d'une intensité comprise entre des limites prédéterminées, et ceci indépendamment de leur température de jonction, et sans avoir recours à des éléments de dissipation thermique prévus à cet effet. Lorsque la température des sources lumineuses varie, l'intensité du courant électrique est adaptée automatiquement pour compenser la variation de l'intensité du flux lumineux qui résulterait de la variation de température. Selon des modes de réalisation préférentiels de l'invention, un circuit de commande analogique impliquant uniquement des composants électroniques simples est utilisé de concert avec une unité de conversion linéaire en soi connue pour réaliser la nouvelle fonctionnalité. La réalisation est donc peu onéreuse et n'occupe qu'un volume d'espace réduit. Le dimensionnement des composants électroniques utilisés, i.e., le type de thermistor et l'impédance des résistances utilisées, permet de cibler des plages de température et d'intensités de courant électrique prédéterminées et adaptées à diverses sources lumineuses.

D'autres caractéristiques et avantages de la présente invention seront mieux compris à l'aide de la description des exemples et des dessins parmi lesquels :
- la figure 1 montre un schéma correspondant à un mode de réalisation préféré dispositif selon l'invention ;
- la figure 2 montre un schéma correspondant à un mode de réalisation préféré d'un dispositif selon l'invention ;
- la figure 3 montre l'évolution du courant électrique traversant une source lumineuse alimentée à l'aide d'un dispositif conforme à un mode de réalisation de l'invention, en fonction d'une indication de la température de la source lumineuse ;
- la figure 4 montre l'évolution du niveau de tension électrique de référence fourni par l'unité de commande en fonction de l'indication de la température de la source lumineuse, en accord avec un mode de réalisation préférentiel de l'invention ;
- la figure 5 montre l'évolution du niveau de tension électrique de référence fourni par l'unité de commande en fonction de l'indication de la température de la source lumineuse, en accord avec un mode de réalisation préférentiel de l'invention ;
- la figure 6 montre l'évolution de l'intensité du flux lumineux émis par une source lumineuse alimentée à l'aide d'un dispositif conforme à un mode de réalisation de l'invention, en fonction du temps de fonctionnement, ainsi que l'intensité du flux lumineux émis par une source lumineuse alimentée à l'aide d'un dispositif connue depuis l'art antérieur.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre d'exemples et de manière non limitative. Des numéros de référence similaires seront utilisés pour décrire des concepts semblables à travers différents modes de réalisation de l'invention. Par exemple, les références 100 et 200 désignent deux modes de réalisation d'un dispositif d'alimentation selon l'invention.

Des composants implicites et en soi connus ne seront pas décrits en détails ni mentionnés si ceux-ci ne sont pas nécessaires pour la compréhension des modes de réalisation qui sont décrits. Par exemple, il est connu qu'un module lumineux comprend des éléments optiques ainsi que différents harnais de connexions ou supports, même si ceux-ci ne sont pas spécifiés explicitement.

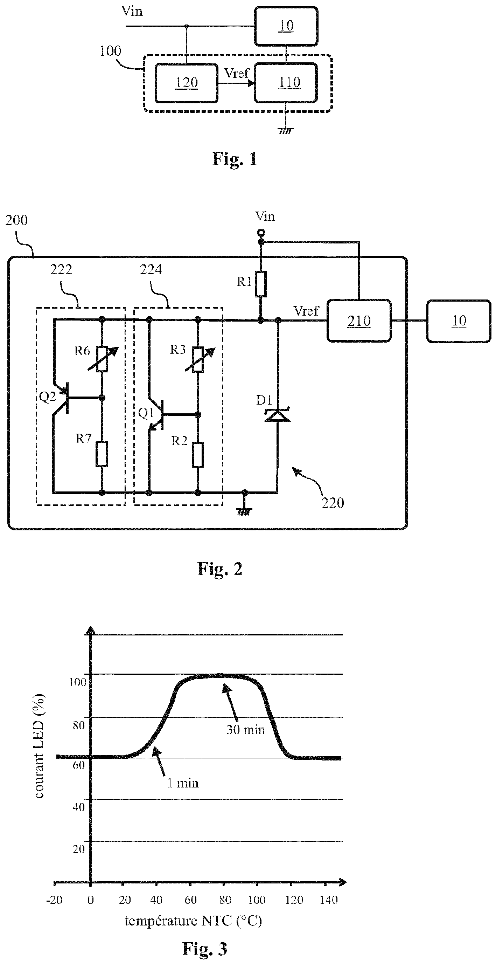

L'illustration de la figure 1 montre un dispositif de pilotage 100 de l'alimentation électrique d'au moins une source lumineuse 10 d'un véhicule automobile. La source lumineuse est par exemple une diode électroluminescente, LED. Il peut s'agir d'une source pixellisée ou matricielle, qui regroupe un nombre important d'éléments semi-conducteurs électroluminescent sur un même substrat. Le dispositif 100 comprend d'une part une unité d'alimentation 110. L'unité d'alimentation est agencée pour fournir un courant électrique à la source lumineuse 10, et l'intensité du courant électrique est dépendante d'une tension électrique de référence Vref. L'unité d'alimentation est par exemple réalisée par un circuit convertisseur de type linéaire, en soi connu. De tels circuits sont à la portée de l'homme du métier, et prennent généralement en entrée une tension d'entrée Vin fournie par une source interne au véhicule automobile. Selon les modes de réalisation de l'invention, Vref peut être différent de Vin, puisque le niveau de tension est influencé par l'unité de commande 120.

L'unité de commande 120 fournit, à partir de la tension d'entrée Vin, différents niveaux de tension électrique de référence à l'unité d'alimentation 110, de manière à ce que cette dernière puisse fournir des courant électriques d'intensités différentes à la source lumineuse 10. Le niveau de tension de référence fourni par l'unité de commande dépend d'une indication de la température de la source lumineuse qui est mise à disposition au niveau de l'unité de commande 120. Afin de pourvoir respecter de consignes d'intensité de flux lumineux réglementaires, les niveaux de tension de référence sont fonction d'au moins deux valeurs seuils de température.

Si la température de la source lumineuse se situe en-dessous d'une première valeur seuil, une tension de référence plus basse que Vin est fournie à l'unité d'alimentation 120. Cette situation correspond typiquement au démarrage du véhicule automobile, ou à l'allumage du feu en question : la température de jonction de la source lumineuse est basse, et la source n'a pas encore besoin d'un courant électrique d'une intensité élevée pour pouvoir émettre un flux lumineux ayant l'intensité requise.

Si la température de la source lumineuse se situe entre une première valeur seuil et une deuxième valeur seuil supérieure à la première valeur seuil, la situation correspond à un régime stable de la source, et un niveau de tension plus élevé est fourni à l'unité d'alimentation 120. Il s'agit à titre d'exemple non-limitatif de la tension Vin, ou d'une valeur indépendante de Vin.

Lors du fonctionnement prolongé de sources lumineuses 10, il devient impératif de veiller à la surchauffe des élément semi-conducteurs, qui peut au pire des cas mener à leur destruction. A cet effet, si la température de la source lumineuse se situe au-dessus de la deuxième valeur seuil, une tension de référence plus basse que lors du régime stable, éventuellement substantiellement égale à la tension fournie lorsque la source est à froid, est fournie à l'unité d'alimentation.

La figure 2 montre un autre mode de réalisation du dispositif de pilotage 200 de l'alimentation électrique de sources lumineuses 10. Le dispositif 200 comprend d'une part une unité d'alimentation 210, de manière similaire au mode de réalisation précédent. En outre, le dispositif 200 comprend également une unité de commande 220 pour réaliser le fonctionnement qui a été décrit pour le mode de réalisation précédent.

L'unité de commande 220 fournit, à partir de la tension d'entrée Vin, différents niveaux de tension électrique de référence à l'unité d'alimentation 210, de manière à ce que cette dernière puisse fournir des courant électriques d'intensités différentes à la source lumineuse 10. A cet effet, l'unité de commande comprend un montage électronique 220 comprenant plusieurs branches 222, 224, une branche par seuil de température. Dans l'exemple non-limitatif illustré par la figure 2, il s'agit de deux valeurs seuils, donc le montage comprend deux branches distinctes. Une branche supplémentaire comprend une diode Zener D1.

La première branche 222 comprend un élément interrupteur réalisé à titre d'exemple par un transistor bipolaire de type PNP. Un thermistor R6 est branché entre l'émetteur et la base, alors qu'une résistance R7 relie la base à la masse. Le thermistor de l'exemple montré est un élément NTC, dont la résistance décroit à température croissante. La première branche 222 est utilisée pour modifier le niveau de tension Vref fourni à l'unité d'alimentation 210 lorsque la température de la source lumineuse est basse, i.e. au-dessous de la première valeur seuil. Afin que le thermistor R6 donne une indication réaliste de la température de la source lumineuse 210, il est avantageux de la placer en proximité physique de la source, par exemple sur le même circuit imprimé.

La deuxième branche 224 comprend un élément interrupteur réalisé à titre d'exemple par un transistor bipolaire de type NPN. Un thermistor R3 est branché entre le collecteur et la base, alors qu'une résistance R2 relie la base à la masse. Le thermistor de l'exemple montré est un élément NTC, dont la résistance décroit à température croissante. La deuxième branche 224 est utilisée pour modifier le niveau de tension Vref fourni à l'unité d'alimentation 210 lorsque la température de la source lumineuse est élevée, i.e. au-dessus de la deuxième valeur seuil. Afin que le thermistor R3 donne une indication réaliste de la température de la source lumineuse 210, il est avantageux de la placer en proximité physique de la source, par exemple sur le même circuit imprimé.

Les composants R3 et R6 sont choisis et dimensionnés de manière à ce que, si la source est déjà dans un état de fonctionnement et de température stable, les éléments interrupteurs respectifs Q1 et Q2 sont dans leur état ouvert. Le régime stable correspond à une température de la source qui se situe entre la première et la deuxième valeur seuil. Dans ce cas, le courant électrique dans l'unité de commande 220 passe principalement à travers la diode Zener D1, qui détermine donc le niveau de tension Vref fourni à l'unité d'alimentation 210.

Lorsque la température augmente, la résistance de R3 diminue. Donc plus de courant électrique traverse la résistance R2, jusqu'à ce que le transistor Q1 bascule vers l'état fermé. L'intensité du courant qui passe par la diode Zener D1 s'en voit diminué, et le niveau de tension Vref décroit. L'intensité du courant électrique fourni à la source 10 est donc diminué afin de la protéger d'un sur-échauffement nocif. Il devient apparent que la température à laquelle la résistance du thermistor R3 est suffisamment petite pour que du courant passe à travers R2, permet de cibler la deuxième valeur seuil. Le biais de tension négatif réalisé par rapport à Vref est principalement déterminé par la résistance R2.

Lorsque la température diminue par rapport à l'état stable, la résistance du thermistor R6 augmente jusqu'à ce que le transistor Q2 bascule vers son état fermé. La résistance R7 est choisie suffisamment petite pour permettre le passage d'un courant électrique d'une intensité suffisante. L'intensité du courant qui passe par la diode Zener D1 s'en voit diminué par rapport à l'état stable, et le niveau de tension Vref décroit. L'intensité du courant électrique fourni à la source 10 est donc diminué afin d'éviter d'importantes variations au niveau de l'intensité du flux lumineux émis.

Ce système permet d'éviter que l'intensité lumineuse émise à froid, ou à des températures ambiantes basses, ne dépasse un limite maximale réglementaire, alors qu'il permet en même temps de respecter les limites réglementaires lorsque la température des sources lumineuses est élevée, tout en les protégeant par rapport à un sur-échauffement. Il est apparent que le comportement du thermistor R6 détermine la première valeur seuil.

Il va de soi que la même fonctionnalité peut être réalisée différents montages électroniques, impliquant par exemple un transistor PNP au lieu d'un transistor NPN, ou en thermistor de type PTC au lieu d'un thermistor de type NTC. De tels modifications sont à la portée de l'homme du métier en s'appuyant sur la description fonctionnelle et l'exemple concret qui vient d'être donnée. De même, les branches 222, 224 peuvent impliquer des composants électroniques supplémentaires non-illustrées. Par exemple, les résistances R2, R7 peuvent être réalisés par des réseaux résistifs impliquant plusieurs composants distincts, sans pour autant sortir du cadre de la présente invention. Si une application donnée a besoin d'un comportement d'alimentation basé sur plusieurs seuils de températures, des branches supplémentaires peuvent être prévus au niveau de l'unité de commande, sans pour autant sortir du cadre de la présente invention.

La figure 3 montre le comportement de l'intensité du courant électrique qui est fourni à la source 10, en fonction de la température des thermistors utilisés dans les deux branches de l'unité de commande. A froid, à une minute après l'allumage du feu, l'intensité du courant est réduite d'environ 30% par rapport à son intensité maximale.

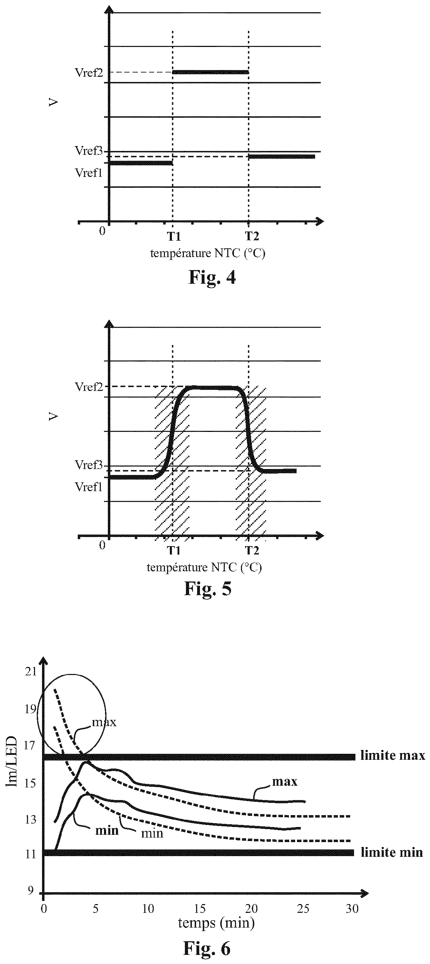

La figure 4 montre l'évolution de la tension de référence fournie par l'unité de commande à l'unité d'alimentation dans un mode de réalisation structuré selon la description qui précède. Lorsque la température des sources lumineuses se situe en-dessous d'une première valeur de température seuil T1, un premier niveau de tension de référence Vref1 est fourni. Lorsque la température se situe entre la première valeur seuil T1 et une deuxième valeur seuil T2 plus élevée, un deuxième niveau de tension de référence Vref2 est fourni. Finalement, lorsque la température se situe au-delà de la deuxième valeur seuil T2, le niveau de tension Vref3 est fourni. Comme illustré, les valeurs Vref1 et Vref3 sont avantageusement inférieures à la valeur Vref2, ce qui permet d'une part de respecter la réglementation par rapport au flux lumineux maximal à basse température, et d'autre part à protéger les jonctions semi-conductrices à températures élevées. Les valeurs Vref1 et Vref3 peuvent idéalement être différentes l'une de l'autres, sans que cela ne soit une limitation de la présente invention.

La figure 5 montre l'évolution de la tension de référence fournie par l'unité de commande à l'unité d'alimentation dans un autre mode de réalisation structuré selon la description qui précède. De manière générale, le comportement est similaire au comportement illustré par la figure 4. Cependant, les variations du niveau de tension électrique de référence se font de manière continue et monotone sur une plage de température sensiblement centrée autour des valeurs seuil T1 et T2 respectivement, montrée par des plages hachurées. Ces plages de variation entre les différents niveaux de tension de référence fournis sont dus à et dépendent du comportement des thermistors utilisés dans les montages qui viennent d'être décrits. De manière générale, la résistance d'un thermistor évolue de manière continue et monotone sur une plage de températures, ce qui explique le comportement illustré.

La figure 6 illustre la différence de comportement entre un dispositif de pilotage conventionnel (lignes en pointillées), dimensionné pour permettre l'émission d'un flux lumineux ayant une luminosité réglementaire (entre les limites min et max) après trente minutes de fonctionnement, et un dispositif de pilotage conforme à l'invention (lignes continues), qui permet de gérer l'émission du flux lumineux de manière dynamique par rapport à la température. La température augmente avec l'évolution du temps. Il devient apparent que le système conventionnel ne permet pas de respecter les consignes réglementaires maximales à froid, la luminosité étant trop élevée, alors que le système conforme à l'invention réduit automatiquement le courant électrique qui alimente la source lumineuse sur cette plage de température.

L'étendue de la protection est déterminée par les revendications.

## Revendications

1. Dispositif de pilotage de l'alimentation électrique d'au moins une source lumineuse d'un véhicule automobile, comprenant une unité d'alimentation agencée pour fournir un courant électrique à ladite source lumineuse, l'intensité du courant électrique étant dépendante d'une tension électrique de référence,
**caractérisé en ce que** le dispositif comprend une unité de commande agencée pour fournir, à partir d'une tension d'entrée, différents niveaux de tension électrique de référence à ladite unité d'alimentation, en fonction de la situation d'une indication de la température de ladite source lumineuse par rapport à au moins une première valeur seuil T1 et une deuxième valeur seuil T2 supérieure à la première valeur seuil.

2. Dispositif selon la revendication 1, **caractérisé en ce que** l'unité de commande est agencée pour fournir
- un premier niveau de tension de référence, si l'indication de la température de la source lumineuse est inférieure à la première valeur seuil de température, T1.
- un deuxième niveau de tension de référence, supérieur au premier niveau de tension de référence, si l'indication de la température de la source lumineuse se situe entre la première valeur seuil de température, T1 et la deuxième valeur seuil de température, T2.
- un troisième niveau de tension de référence, si l'indication de la température de la source lumineuse est supérieure à la deuxième valeur seuil de température, T2.

3. Dispositif selon la revendication 2, dans lequel l'unité de commande est agencée pour augmenter/diminuer le niveau de tension de référence de manière monotone entre le premier, deuxième et troisième niveau de tension de référence, en fonction de l'évolution de l'indication de la température de la source lumineuse sur une plage de valeurs sensiblement centrée autour des premières et deuxièmes valeurs seuils T1 et T2.

4. Dispositif selon une des revendication 2 ou 3, **caractérisé en ce que** l'unité de commande comprend un montage d'au moins deux branches dans lequel chaque branche comprend un élément interrupteur et un thermistor agencé de manière à ce que l'état d'ouverture de l'élément interrupteur soit une fonction de la température du thermistor, et dans lequel le montage est agencé à fournir ledit deuxième niveau de tension de référence si aucun courant électrique ne traverse lesdites branches.

5. Dispositif selon la revendication 4, **caractérisé en ce que** l'élément interrupteur comprend un transistor bipolaire.

6. Dispositif selon une des revendications 4 ou 5, **caractérisé en ce que** chaque branche comprend au moins une résistance.

7. Dispositif selon une des revendications 4 à 6, **caractérisé en ce que** les caractéristiques des composants électroniques d'une branche définissent une des valeurs seuils, ainsi qu'un biais de tension négatif par rapport au premier niveau de tension de référence.

8. Dispositif selon une des revendications 1 à 7, **caractérisé en ce que** l'unité de commande est agencée de manière à ce que le niveau de tension de référence fourni à l'unité d'alimentation si l'indication de la température est inférieure à la première valeur seuil soit sensiblement égal au niveau de tension de référence fourni si l'indication de la température est supérieure à la deuxième valeur seuil.

9. Dispositif selon une des revendications 1 à 8, **caractérisé en ce que** l'unité d'alimentation comprend un circuit convertisseur linéaire.

10. Module lumineux pour un véhicule automobile comprenant au moins une source lumineuse et un dispositif de pilotage de l'alimentation électrique de ladite source lumineuse, **caractérisé en ce que** le dispositif de pilotage est conforme à l'une des revendications 1 à 9.

11. Module lumineux selon la revendication 10, **caractérisé en ce que** ladite source lumineuse comprend une source à élément semi-conducteur électroluminescent.

12. Module lumineux selon une des revendications 9 ou 11, **caractérisé en ce que** la source lumineuse comprend un élément semi-conducteur électroluminescent pixellisé.
